# EUROPEAN PATENT SPECIFICATION

(11) **EP 3 135 466 B1**
(45) Date of publication and mention of the grant of the patent: **11.12.2019**
(21) Application number: 16191316.5
(22) Date of filing: 14.10.2011
(51) Int. Cl.: B29D 30/24, B29D 30/26

(54) **RADIALLY EXPANDABLE DRUM**
RADIAL ERWEITERBARE TROMMEL
TAMBOUR RADIALEMENT EXTENSIBLE

(30) Priority: 14.10.2010 US 904265
(43) Date of publication of application: 01.03.2017
(62) Divisional of application: 11833489.5
(73) Proprietor: Davian Enterprises LLC, Greenback, Tennessee 37742 (US)
(72) Inventor: JONES, William, Dudly West Midlands (GB); HASSELL, Stuart J., Duley West Midlands DY2 7TL (GB)
(74) Representative: Sawodny, Michael-Wolfgang

(56) References cited:
- US-A- 3 837 968
- US-A- 5 203 947
- US-A- 5 709 768
- US-A- 6 013 147

## Description

### BACKGROUND OF THE INVENTION

### 1. Field of Invention

This invention pertains to expandable decks for the manufacture of tubular assemblies. More particularly, this invention pertains to fully supported expandable decks for the manufacture of tubular assemblies.

### 2. Description of the Related Art

In the manufacture of tires, for example, tires are generally built on cylindrical decks. The decks are expandable from a closed position, having a minimal diameter, to a fully expanded position. Locking mechanisms are provided so that the deck is usable for the manufacture of a variety of different sizes of tires.

Prior decks have employed plates having interwoven "fingers" which leave increasingly larger gaps as adjacent plates are moved apart to define a larger diameter for the deck. The outboard ends of the "fingers" are unsupported. As a result of the lack of support, when the deck is spun, at high speeds, centrifugal force causes the fingers to extend outwardly from the deck. In addition fingers can distort inwardly when tire components are consolidated on the expanded deck, potentially causing non-uniform tires. Non-uniform tires are unacceptable from noise and vibration standpoints.

From US 6,013,147 A1 a belt and tread drum has been made known. The belt and tread drum of US 6,013,147 A1 has an annular shell comprising a plurality of circumferentially spaced segments, each of which is mounted on a carrier which disposed in circumscribing relationship to a generally cylindrical actuator rotatably connected with a reciprocation piston disposed within a cavity defined between the actuator and a hub fixed to a central core of the drum. Translational movement of the piston between extended and retracted positions in a direction parallel to the rotational axis of the drum is converted into selected rotational movement of the actuator relative to the hub. A plurality of sets of links interposed between the segments and the actuator and hub have their fist ends commonly pivotally pinned to a segment. The second end of one link is pivotally pinned to the hub. Rotation of the actuator relative to the hub controls the arcuate separation of these second ends such that bringing these second ends toward contiguity moves the segments radially outwardly, and conversely, moving these second ends arcuately apart serves to move the segments radially inwardly of the drum. A hand wheel establishes maximum and minimum rotational movement of the actuator and provides a visual indication of the radial positions of the several segments, i.e. the diameter of the drum.

US 5,203,947 A1 shows a tire forming drum including a plurality of main segments arranged around a main shaft of the drum and rotatable together with the main shaft. The main segment are reciprocatingly radially moveable toward and away from the main shaft to adjust the diameter of the drum and have circular arc surfaces, respectively, on which a tire constituent member is wrapped. The tire forming drum further includes sub segments having plural circular arc surfaces, respectively, to conform to change on diameter of the drum. The sub segments are arranged between the main segments to be movable to fill clearances occurring between the adjacent segments in response to the movements of the main segments.

US 5,709,768 A1 describes an apparatus including a frame, preferably circular in geometry and having a central axis. At spaced apart locations about the circumference of the frame there are provided a plurality of links, each of which is pivotally mounted on a the frame and each of which carries a shoe having an arcuate surface. Each link includes at least one leg portion having an outboard end. The outboard ends of the leg portions of the plurality of links are interconnected with one another and with a drive mechanism whose operation serves to rotate the interconnected links in unison about their respective rotational mountings to the frame. As the links are rotated, their respective shoes are caused to move along an arcuate path which repositions the shoes generally radially inwardly or outwardly with respect to the central axis of the apparatus. To retain the circularity of the arcuate surfaces of the shoes as they are moved radially inwardly and outwardly, the shoes are interconnected by respective rigid rods. One end of each rod is fixedly anchored in a slot opening outwardly of one side margin of a first shoe and projects therefrom to have its opposite end slidably received in a second slot in a circumferentially adjacent shoe. The slots and rod share a common longitudinal axis, which axis is oriented normal to a radius of the frame.

From US 3,837,968 A1 a tire building drum particularly adapted for massive tires such as those used in off-the-road construction equipment features four axially symmetrically collapsible segments each comprising a primary member and a pair of secondary members hinged about the longitudinal edges of the primary member to swing between positions wherein the secondary members are swung beneath the respective primary members and wholly within the sector defined by the respective primary members, has made known.

US 2010/0101732 A1 describes a method and apparatus for establishing a range of diameters of the cylindrical working surface of a drum and like devices for rasping, handling, shaping or other like function, of round or tubular objects, such as tire carcasses and belt and tread packages as employed in the manufacture of vehicle tires. The device includes a plurality of segmented modules adapted to be quickly and releasably manually affixed to a drum or like device in a manner which establishes the range of obtainable diameters of the cylindrical working surface of the existing device.

It is generally desirable to use a single deck to build the largest variety of sizes of tires as possible with simple adjustments rather than replacement or addition of equipment to the deck. Prior decks have generally been limited to a diameter range. Prior efforts to provide expanded diameters on a single tire building apparatus have included attaching an additional deck upon the original deck to provide larger diameters. However, this does require additional apparatus, which takes additional time and cost for an operator to change.

### BRIEF SUMMARY OF THE INVENTION

According to one embodiment of the present invention, a deck comprises a plurality of fixed segments mounted upon a fixed rod. Each fixed rod is secured to deck carriers by a clamp plate at each end. A plurality of fixed deck segments are mounted upon the fixed rod. A pivot rod extends parallel to and spaced from the fixed rod and provides a rotating pivot point for a plurality of pivot segments. Each pivot segment defines an aperture through which the pivot rod extends. Each deck pivot segment defines a guide slot through which an adjacent fixed rod extends to provide radial guidance for the pivot segment. The complete deck comprises a plurality interleaved fixed segments and pivot segments. The pivot segments are supported at two locations to prevent radial displacement.

The deck carriers are moved radially between a fully closed position and a fully extended position by a central mechanism as are well-known in the art.

### BRIEF DESCRIPTION OF THE SEVERAL VIEWS OF THE DRAWINGS

The above-mentioned features of the invention will become more clearly understood from the following detailed description of the invention read together with the drawings in which:
Fig. 1 is an elevation view of one embodiment of a deck in a fully extended position.
Fig. 2 is an elevation view of one embodiment of a deck in a fully closed position.
Fig. 3 is a partial perspective view of the deck of Fig. 1.
Fig. 4 is a partial perspective view of the deck of Fig. 2.
Fig. 5 is a perspective view of one embodiment of a pivot segment adapted for the present invention.

### DETAILED DESCRIPTION OF THE INVENTION

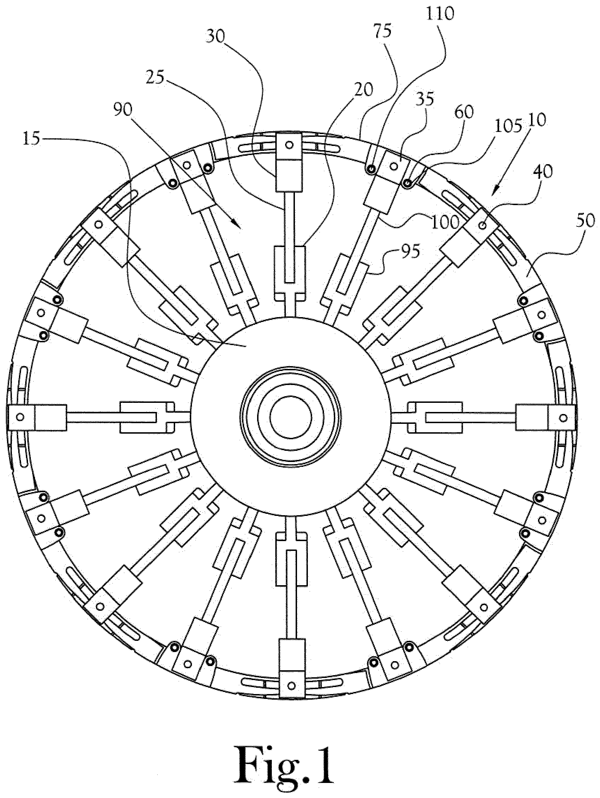

An expandable cylindrical deck surface for building tubular assemblies is disclosed which offers radial support for a wide range of working diameters. The expandable cylindrical deck surface, or "deck," is illustrated generally at 10 in the Figures. With initial reference to Figure 1, in one embodiment a deck 10 comprises a plurality of elongated deck carriers 30 mounted upon a central expansion mechanism 15 in a generally parallel and cylindrical formation, with each elongated deck carrier 30 extending generally parallel to one another and to a central axis of the cylindrical formation. The central expansion mechanism 15 includes a plurality of yoked first pivot sections 20 and second pivot sections 25 which cooperate to move each deck carrier 30 axially relative to the cylindrical formation to provide radial expansion and contraction of the deck carriers 30, and hence, of the deck 10. A plurality of pivot segments 50 are secured along the deck carriers 30 to collectively define an outer circumferential working surface 75. Each pivot segment defines a first end 80 adapted to be hingedly connected along one of the deck carriers 30 and an opposite second end 85 adapted to be slidably connected along an adjacent deck carrier 30. As will be further discussed below, the pivot segments 50 are arranged in alternating orientation between adjacent deck carriers 30, such that expansion and contraction of the central expansion mechanism 15 allows for slidable expansion and contraction of the outer circumference of the working surface 75 while maintaining support by the deck carriers 30 of each end 80, 85 of the pivot segments 50.

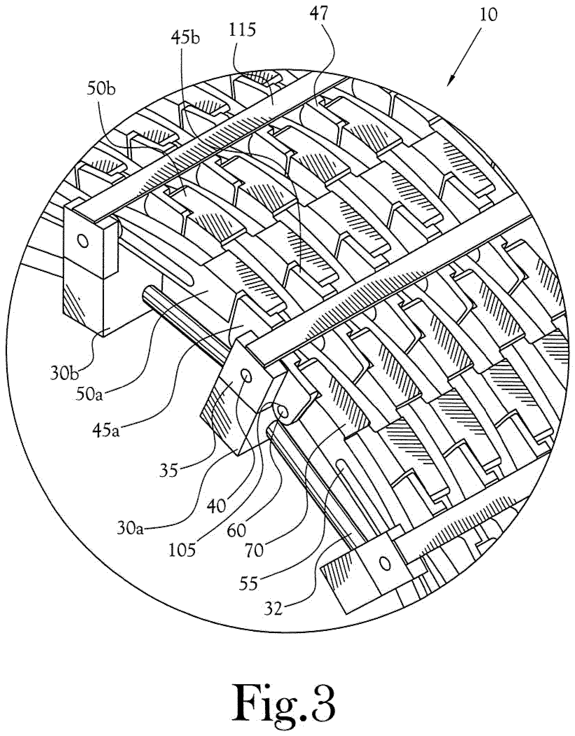

Referring to Figure 1, the deck 10 is mounted upon a central expansion mechanism 15 which moves axially relative to the cylindrical deck 10 to provide radial expansion and contraction of the deck 10. In the illustrated embodiment, the central expansion mechanism 15 includes a plurality of radially-extending expansion members 90, each expansion member defining a first pivot section 20 and a second pivot section 25. Each first pivot section 20 is hingedly connected to a second pivot section 25 at respective first ends 95 thereof, such as for example by a yoked connection. A second end 100 of each second pivot section 25 is pivotally secured to a deck carrier 30. In one embodiment, one expansion member 90 is provided adjacent each axial end of each elongated deck carrier 30, such that simultaneous rotation of each second pivot section 25 about its respective first pivot section 20 results in movement of the deck carriers 30 generally toward and away from a central axis of the cylindrical formation of the deck carriers 30 while also maintaining cylindrical arrangement of the deck carriers 30. However, other configurations for the expansion members 90 may be used. Furthermore, in the embodiment shown in Figure 3, tangent guide rods 32 extend between adjacent deck carriers 30 to provide additional stability for the cylindrical deck 10. Each guide rod 32 is fixed to one deck carrier 30 and is slidingly received in an aperture defined in an adjacent deck carrier 30. In this configuration, the guide rods 32 cooperate to maintain the deck carriers 30 in their cylindrical formation throughout expansion and contraction of the deck carriers 30.

Referring to Figures 1-4, each deck carrier 30 has a fixed rod 40 mounted thereto which extends along the elongated dimension of the deck carrier 30. A plurality of fixed segments 45 are provided at spaced apart intervals along each deck carrier 30, with each fixed segment 45 extending generally perpendicularly from an associated fixed rod 40. Each set of fixed segments 45 along each fixed rod 40 collectively define first and second through bores 105, 110 extending parallel to and along opposite sides of the fixed rod 40. One pivot rod 60 is received within each of the first and second through bores 105, 110 and is mounted to each fixed segment 45 along the associated deck carrier 30. In the illustrated embodiment, an elongated fixed deck plate 115 is mounted on each deck carrier 30 extending along an axial dimension of the deck 10. A clamp plate 35 is secured at each end of the deck carrier 30. A fixed rod 40 is secured in apertures defined in the clamp plates 35 located on each opposite end of each deck carrier 30.

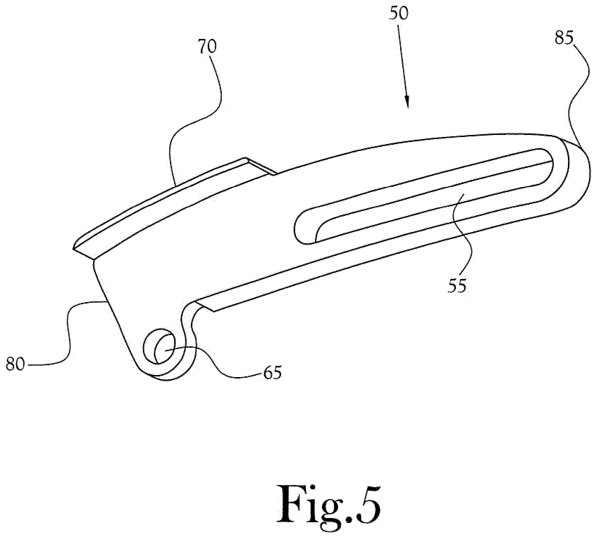

Referring to Figures 3 and 5, a plurality of pivot segments 50 are provided, with each pivot segment defining a rotation aperture 65 and a curved, elongated guide slot 55. Each pivot segment rotation aperture 65 is adapted to be rotatably mounted upon an associated pivot rod 60 between adjacent ones of the fixed segments 45 mounted along each deck carrier 30. Each pivot segment guide slot 55 is adapted to slidingly receive therein a fixed rod 40 of an adjacent deck carrier 30.

In several embodiments, a plurality of fixed segments 45 and pivot segments 50 are alternatingly mounted upon the fixed rods 40 and pivot rods 60 of adjacent deck carriers, with the pivot segments 50 arranged in alternating orientation between the adjacent deck carriers 30. Mounting of the fixed segments 45 and the pivot segments 50 of adjacent deck carriers 30 are mirror images, such that the pivot segments 50 of each deck carrier 30 mesh with pivot segments 50 of an adjacent deck carrier 30 to form the working surface 75. For example, in the illustrated embodiment of Figure 3, a first fixed segment 45a is mounted to a fixed rod 40 of a first deck carrier 30a at a first end of the fixed rod 40. Adjacent the first fixed segment 45a along the first deck carrier 30a, a first end 80 of a first pivot segment 50a is mounted to the pivot rod 60 of the first deck carrier 30a through receipt of the pivot rod 60 through the rotation aperture 65 of the first pivot segment 50a. The second end 85 of the first pivot segment 50a extends toward an adjacent second deck carrier 30b and receives the fixed rod 40 of the second deck carrier 30b within the guide slot 55 of the first pivot segment 50a. A second pivot segment 50b is mounted at a first end 80 thereof to the second deck carrier 30b through receipt of a pivot rod 60 of the second deck carrier 30b through the rotation aperture 65 of the second pivot segment 50b. The second end 85 of the second pivot segment 50b extends from the second deck carrier 30b along the first pivot segment 50a opposite the first fixed segment 45a, and the fixed rod 40 of the first deck carrier 30a is received within the guide slot 55 of the second pivot segment 50b. Adjacent the second pivot segment 50b and along the first deck carrier 30a, a second fixed segment 45b is mounted to the first deck carrier fixed rod 40, whereupon the pattern of mounting alternating fixed segments 45 and pivot segments 50 between the first and second deck carriers 30a, 30b repeats along the length of the first deck carrier 30a and throughout the various deck carriers 30 of the deck 10.

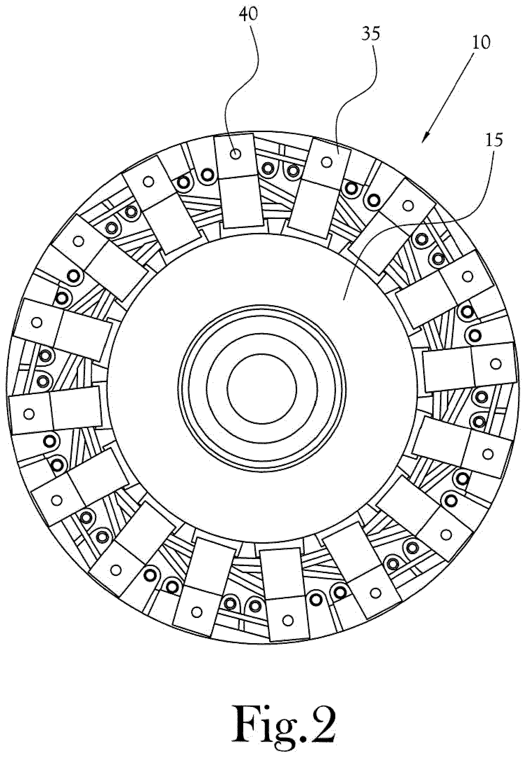

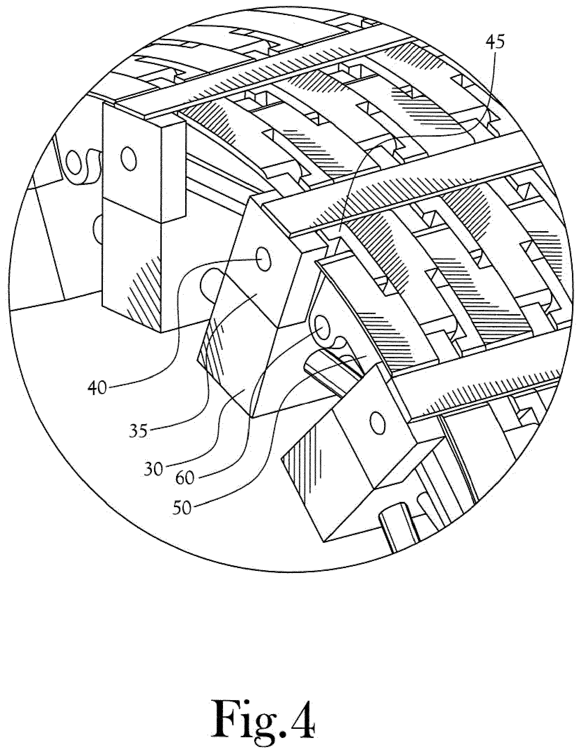

The fixed segments 45 each define an outer surface 47 which is cambered to define a portion of a smooth cylindrical surface. Likewise, the pivot segments 50 each define an outer surface 70 which is cambered to define a portion of a smooth cylindrical surface. The outer surfaces 47, 70 of the fixed segments 45 and pivot segments 50 are sized and shaped to interlock with one another when the deck 10 is in a fully collapsed position (see Figures 2 and 4) such that the outer surfaces 47, 70 cooperate to provide a smooth cylindrical working surface 75. When the deck 10 is expanded (see Figures 1 and 3), the above-discussed alternating pattern of mounting the fixed segments 45 and pivot segments 50 result in slight separation of the various outer surfaces 47, 70 of the fixed segments 45 and pivot segments 50 respect to one another along the cylindrical working surface 75, such that the outer surfaces 47, 70 cooperate to maintain a substantially cylindrical working surface 75.

In the above-discussed expansion and contraction of the deck 10, each of the pivot segment apertures 65 is adapted to rotate about the pivot rod 60 associated with one set of opposing deck carriers 30 and is adapted to slidingly engage the fixed rod 40 of an adjacent set of deck carriers 30 through the pivot segment guide slot 55. Thus, each pivot segment 50 is supported at each end regardless of the degree of expansion or collapse of the deck 10. The slidable relationship of each pivot segment guide slot 55 results in a deck 10 which is infinitely adjustable over a wide range of radii through any of various known central mechanisms known in the art. As the deck is expanded from a fully closed position, as shown in Figure 2, to a fully open position, as shown in Figure 1, each of the pivot segments 50 is allowed to rotate about the pivot rod 60 associated with one deck carrier 30 and to slide in an arcuate path about the fixed rod of the adjacent deck carrier 30. Each pivot segment is thus supported at two points over its length over a high range of adjustment to prevent radial distortion of the working surface 75 either through pressure or centrifugal force which occurs at high speeds of rotation or at package consolidation.

Those skilled in the art will recognize that various widths and shapes of the fixed segments 45 and pivot segments 50 may be used. Furthermore, while the present invention has been illustrated by description of several embodiments and while the illustrative embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative apparatus and methods, and illustrative examples shown and described.

## Claims

1. An expandable deck (10) comprising:
a plurality of elongated deck carriers (30) mounted upon an expansion mechanism (15) in a generally cylindrical formation, each said deck carrier (30) having an elongated dimension extending generally parallel to a central axis of said cylindrical formation;
a first rod mounted to a first one of said deck carriers and extending along said elongated dimension of said first one of said deck carriers a second rod mounted to an adjacent second deck carrier and extending along said elongated dimension of said adjacent second deck carrier;
a plurality of pivot segments (50) extending between said first and second deck carriers, each said pivot segment defining a rotation aperture rotatably mounted upon said second rod and a guide slot slidingly receiving said first rod; and
a plurality of fixed segments (45) secured to said first deck carrier, said fixed and pivot segments being (50) alternatingly mounted along said first rod,
whereby expansion of said expansion mechanism results in separation of said first deck carrier from said second deck carrier, thereby resulting in rotation of said pivot segments about said second rod and sliding of said first rod along each said guide slot of said pivot segments.

2. The expandable deck of claim 1, wherein each said pivot segment (50) defines an outer cambered surface, said pivot segment (50) outer cambered surfaces cooperating to form a portion of a working surface of said deck.

3. The expandable deck of claim 1, each said fixed segment defining an outer cambered surface, said pivot segment (50) outer cambered surfaces and said fixed segment (45) outer cambered surfaces cooperating to form a portion of a working surface of said deck.

4. The expandable deck of claim 1, wherein said guide slot is arcuate in shape.

5. The expandable deck of claim 1, further including a plurality of guide rods (55), each guide rod being fixed to one deck carrier and being slidingly received in an aperture defined in an adjacent deck carrier, whereby said guide rods cooperate to maintain said deck carriers in said general cylindrical formation.

## Patentansprüche

1. Erweiterbares Deck (10), umfassend:
eine Vielzahl von langgestreckten Deckträgern (30), die in einer allgemein zylindrischen Formation auf einem Erweiterungsmechanismus (15) montiert sind, wobei jeder Deckträger (30) eine Längsabmessung aufweist, die sich allgemein parallel zu einer Mittelachse der zylindrischen Formation erstreckt;
eine erste Stange, die an einem ersten der Deckträger montiert ist und sich entlang der Längsabmessung des ersten der Deckträger erstreckt;
eine zweite Stange, die an einem benachbarten zweiten Deckträger montiert ist und sich entlang der Längsabmessung des benachbarten zweiten Deckträgers erstreckt;
eine Vielzahl von Schwenksegmenten (50), die sich zwischen den ersten und zweiten Deckträgern erstrecken, wobei jedes Schwenksegment Folgendes definiert: eine Rotationsöffnung, die drehbar an der zweiten Stange montiert ist, und einen Führungsschlitz, der die erste Stange gleitend aufnimmt; und
eine Vielzahl von feststehenden Segmenten (45), die an dem ersten Deckträger montiert sind, wobei die feststehenden Segmente und die Schwenksegmente (50) abwechselnd entlang der ersten Stange montiert sind,
wobei die Erweiterung des Erweiterungsmechanismus zu einer Trennung des ersten Deckträgers von dem zweiten Deckträger führt, was somit zu einer Drehung der Schwenksegmente um die zweite Stange und zu einem Gleiten der ersten Stange entlang jedes Führungsschlitzes der Schwenksegmente führt.

2. Erweiterbares Deck nach Anspruch 1, wobei jedes Schwenksegment (50) eine äußere gewölbte Fläche definiert, wobei die äußeren gewölbten Flächen der Schwenksegmente (50) zusammenwirken, um einen Abschnitt einer Arbeitsfläche des Decks zu bilden.

3. Erweiterbares Deck nach Anspruch 1, wobei jedes feststehende Segment eine äußere gewölbte Fläche definiert, wobei die äußeren gewölbten Flächen der Schwenksegmente (50) und die äußeren gewölbten Flächen der feststehenden Segmente (45) zusammenwirken, um einen Abschnitt einer Arbeitsfläche des Decks zu bilden.

4. Erweiterbares Deck nach Anspruch 1, wobei der Führungsschlitz eine bogenförmige Form aufweist.

5. Erweiterbares Deck nach Anspruch 1, ferner beinhaltend eine Vielzahl von Führungsstangen (55), wobei jede Führungsstange an einem Deckträger befestigt ist und gleitend in einer Öffnung aufgenommen ist, die in einem benachbarten Deckträger definiert ist, wobei die Führungsstangen zusammenwirken, um die Deckträger in der allgemein zylindrischen Formation zu halten.

## Revendications

1. Tablier extensible (10) comprenant :
une pluralité de porte-tabliers allongés (30) montés sur un mécanisme d'extension (15) dans une formation généralement cylindrique, chacun desdits porte-tabliers (30) ayant une dimension allongée s'étendant généralement parallèle à un axe central de ladite formation cylindrique ;
une première tige montée sur un premier desdits porte-tabliers et s'étendant le long de ladite dimension allongée dudit premier desdits porte-tabliers
une seconde tige montée sur un second porte-tablier adjacent et s'étendant le long de ladite dimension allongée dudit second porte-tablier adjacent ;
une pluralité de segments pivotants (50) s'étendant entre lesdits premier et second porte-tabliers, chacun desdits segments pivotants définissant une ouverture de rotation montée en rotation sur ladite seconde tige et une fente de guidage recevant en coulissement ladite première tige ; et
une pluralité de segments fixes (45) assujettis audit premier porte-tablier, lesdits segments fixes et pivotants (50) étant montés en alternance le long de ladite première tige,
moyennant quoi une extension dudit mécanisme d'extension provoque une séparation dudit premier porte-tablier dudit second porte-tablier, provoquant ainsi une rotation desdits segments pivotants autour de ladite seconde tige et un coulissement de ladite première tige le long de chacune desdites fentes de guidage desdits segments pivotants.

2. Tablier extensible selon la revendication 1, dans lequel chacun desdits segments pivotants (50) définit une surface incurvée extérieure, des surfaces incurvées extérieures dudit segment pivotant (50) coopérant pour former une portion d'une surface de travail dudit tablier.

3. Tablier extensible selon la revendication 1, chacun desdits segments fixes définissant une surface incurvée extérieure, des surfaces incurvées extérieures dudit segment pivotant (50) et des surfaces incurvées extérieures dudit segment fixe (45) coopérant pour former une portion d'une surface de travail dudit tablier.

4. Tablier extensible selon la revendication 1, dans lequel ladite fente de guidage est de forme arquée.

5. Tablier extensible selon la revendication 1, comportant en outre une pluralité de tiges de guidage (55), chaque tige de guidage étant fixée à un porte-tablier et étant reçue en coulissement dans une ouverture définie dans un porte-tablier adjacent, moyennant quoi lesdites tiges de guidage coopèrent pour maintenir lesdits porte-tabliers dans ladite formation généralement cylindrique.
